**Europäisches Patentamt**

**European Patent Office**

**Office européen des brevets**

(19)

(11) Publication number : **0 564 115 A1**

(12) # EUROPEAN PATENT APPLICATION

(21) Application number : **93301906.9**

(22) Date of filing : **12.03.93**

(51) Int. Cl.⁵ : **C02F 11/08**

(30) Priority : **01.04.92 US 861739**

(43) Date of publication of application :
**06.10.93 Bulletin 93/40**

(84) Designated Contracting States :
**AT BE CH DE DK ES FR GB GR IE IT LI LU MC NL PT SE**

(71) Applicant : **ZIMPRO PASSAVANT ENVIRONMENTAL SYSTEMS, INC.**
**301 West Military Road**
**Rothschild, Wisconsin 54474 (US)**

(72) Inventor : **Momont, Joseph A.**
**1849 Ricklefs Place**
**Mosinee, Wisconsin 54455 (US)**

(74) Representative : **Goodanew, Martin Eric et al**
**MATHISEN, MACARA & CO. The Coach House**
**6-8 Swakeleys Road**
**Ickenham Uxbridge UB10 8BZ (GB)**

(54) **Method of monitoring pH in caustic liquor wet oxidation.**

(57) A process is described for monitoring pH in caustic liquor wet oxidation systems. An offgas (36) carbon dioxide baseline value is established (38) for the operating system where oxidized liquid effluent is at pH 7 or above. Offgas carbon dioxide content deviating by a selected proportion above the baseline vale indicates a drop in liquid effluent pH to 7 or less. Sufficient alkalinity is added to the raw wastewater (10) to bring the effluent pH to 7 or above and prevent excessive corrosion to the materials of construction of the nickel-based wet oxidation system.

FIGURE

EP 0 564 115 A1

This invention relates to a method for protecting the materials of construction of a wet oxidation system treating caustic wastewaters, particularly caustic sulfide wastewaters.

A variety of caustic wastewaters are generated which require treatment before the wastewater is released to the environment. These caustic wastewaters are generated in the petrochemical industry, petroleum refining, pulp and paper manufacture and various chemical manufacturing processes. The caustic solutions are commonly used to remove acidic components such as hydrogen sulfide, $H_2S$, mercaptans, RSH, phenols, ArOH, and organic acids, $RCO_2H$, from gas and liquid streams.

The contaminated caustic wastewaters represent a formidable disposal problem due to their caustic content as well as the acidic components therein. Neutralization of the caustic wastewaters by acid addition can result in release of the acidic components. Therefore it is essential to convert the acidic components to a form suitable for release to the environment. Further, there may be additional components present in the caustic wastewater which adds to the Chemical Oxygen Demand (COD) of the wastewater. These components include various carbonaceous materials including oils and polymers.

Wet oxidation is the preferred method of treatment for caustic wastewaters since the products of oxidation are inorganic sulfate, carbon dioxide and water. Also, the oxidation is carried out within a closed system which prevents transfer of pollutants to the atmosphere. The highly alkaline nature of these caustic wastewaters requires special materials of construction for wet oxidation systems employed in their treatment. The nickel-based alloys, such as Inconel 600, are well suited to withstand the elevated temperatures and pressures employed in the wet oxidation process for caustic wastewater treatment.

In U.S. Patent no. 3,761,409 McCoy et al. disclose a continuous process for the air oxidation of sulfidic, ammoniacal sour water where feed water is adjusted to a pH between about 6 to 13 and the oxidation occurs at 250°F to 520°F at 75 to 800 psig with up to 500% excess oxygen based on the stoichiometric conversion of sulfide to sulfate.

Chowdhury in U.S. Patent no. 4,350,599 discloses wet oxidation of caustic liquor where carbon dioxide generated by the oxidation is used to reduce the pH of the caustic feed liquor to below 11. Maintaining the feed below pH 11.0 but above 7.0 prevents corrosion of the less expensive stainless steel wet oxidation system.

As mentioned above, the nickel-based alloys are resistant to corrosion by caustic sulfide wastewaters under wet oxidation conditions, provided the pH of the wastewater is maintained on the alkaline side, that is above pH 7. The wet oxidation of sulfide wastewaters generates acidic species which consume alkalinity. Depending on the components present, their concentration, and the pH of the caustic sulfide wastewater, wet oxidation may produce an oxidized wastewater in which the pH is acidic, i.e. all alkalinity is consumed, and which is highly corrosive to the nickel-based wet oxidation system.

Beula et al. in U.S. Patent No. 5,082,571 have devised a process which relates the species present in the caustic liquor to the amount of caustic required to maintain an excess of alkalinity in the liquor during wet oxidation treatment. This process allows a nickel-based alloy wet oxidation system to safely treat caustic sulfide liquor without excessive corrosion to the materials of construction of the system. The process requires extensive analysis of the raw feed liquor and gives best results with a constant composition feed. Problems can result where feed composition changes and alkalinity consuming species increases, causing a drop in the pH of the oxidized wastewater.

To overcome this problem, we have devised a method of determining a drop in pH for a caustic wastewater undergoing wet oxidation treatment which allows for the adjustment of the raw feed composition, i.e. pH, before corrosion to the materials of construction of the wet oxidation system occurs. It must be recognized that the corrosion problems need careful consideration in that the integrity of the pressurized wet oxidation system is important for both safety and economic reasons.

The invention comprises a process for preventing corrosion to the materials of construction of a nickel-base alloy wet oxidation system treating raw caustic wastewaters at elevated temperature and pressure comprising the steps;

(a) establishing a flow of caustic wastewater and oxygen containing gas through said wet oxidation system to produce an oxidized gas/liquid mixture;

(b) separating said oxidized gas/liquid mixture into an oxidized liquid phase effluent and a gaseous phase effluent;

(c) measuring the carbon dioxide content of said gaseous phase effluent to establish a baseline carbon dioxide content value while the pH of said system liquid effluent remains at 7 or above; and

(d) adding sufficient alkalinity to said raw caustic wastewater to maintain said system liquid effluent pH at 7 or above, upon the carbon dioxide content of said gaseous phase effluent exceeding said baseline value by a selected proportion, thereby preventing excessive corrosion to the material of construction of said wet oxidation system.

In an alternative embodiment of the invention, a flow of clean water and oxygen containing gas is established through the system and caustic wastewater is injected into the system at the reactor or any point upstream thereof.

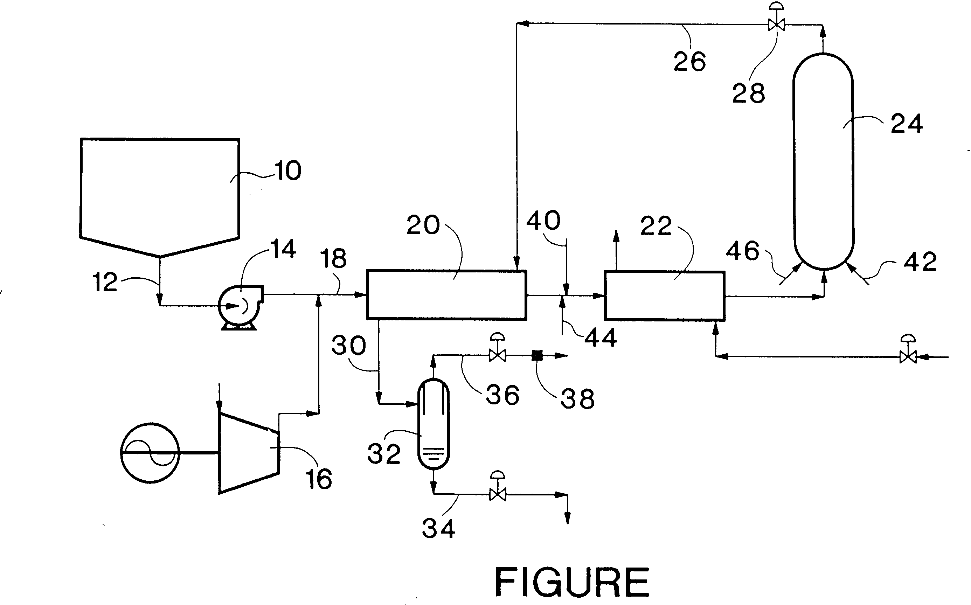

The invention is applicable to all caustic wastewaters treated by wet oxidation. It is particularly applicable to caustic sulfide scrubbing liquor and the invention will now be described as applied to such a wastewater by way of example, and with reference to the accompanying drawing in which the sole FIGURE shows a schematic flow diagram of a wet oxidation system used for treatment of caustic sulfide scrubbing liquors.

Referring to the FIGURE, raw caustic sulfide liquor from a storage tank **10** flows through a conduit **12** to a high pressure pump **14** which pressurizes the liquor. The raw liquor is mixed with a pressurized oxygen-containing gas, such as air, supplied by a compressor **16**, within a conduit **18**. The mixture flows through a heat exchanger **20** where it is heated to a temperature which initiates oxidation. The heated mixture then flows through a second heat exchanger **22** which provides auxiliary heat for startup of the system. For waste with low COD content, auxiliary heating may need to be continuously applied through the second heat exchanger **22** in order to maintain the desired operating temperature for the wet oxidation system. The heated feed mixture then enteres a reactor vessel **24** which provides a residence time wherein the bulk of the oxidation reaction occurs. The oxidized liquor and oxygen depleted gas mixture then exits the reactor through a conduit **26** controlled by a pressure control valve **28**. The hot oxidized effluent traverses the heat exchanger **20** where it is cooled against incoming raw liquor and gas mixture. The cooled effluent mixture flows through a conduit 30 to a separator vessel **32** where liquid and gases are disengaged. The liquid effluent exits the separator vessel **32** through a lower conduit **34** while the gases are vented through an upper conduit **36**. The carbon dioxide content of the gases are continuously measured by a carbon dioxide monitor **38**, located within the upper conduit **36**. The carbon dioxide monitor **38** may be any of the commercially available instruments well known in the industry.

It is imperative that an excess of alkalinity be maintained throughout the nickel-based alloy wet oxidation system when treating caustic sulfide liquor. The excess alkalinity maintains the liquid phase at pH 7 or above and prevents corrosion of the nickel-based alloy system.

The raw caustic wastewater may contain carbonate or bicarbonate salts depending upon the pH of the liquid. Additionally, carbon dioxide is generated by oxidation of carbonaceous compounds in the waste liquor. The carbon dioxide generated may be absorbed by the caustic solution within the system as carbonate/bicarbonate also.

It is well known that as a carbonate solution is made acidic, carbon dioxide gas is generated. Acid addition to a carbonate solution protonates the carbonate ion, giving carbonic acid which decomposes to water and carbon dioxide which is liberated from solution. The proportion of carbonate, bicarbonate and carbonic acid present in a liquid as a function of pH can be readily calculated. Here the total carbonate concentration is denoted as $C_{carb}$. The dissociation constants for carbonic acid ($H_2CO_3$) are:

$$K_1 = 4.3 \times 10^{-7} \text{ and } K_2 = 5.6 \times 10^{-11} \text{ and } \{H^+\} = 10^{-pH}$$

According to acid-base equilibrium principles, it follows that:

$$\{H_2CO_3\} = C_{carb} [ \{H^+\}^2 / \{H^+\}^2 + K_1\{H^+\} + K_1K_2 ]$$
$$\{HCO_3^-\} = C_{carb} [ K_1 \{H^+\}/ \{H^+\}^2 + K_1\{H^+\} + K_1K_2 ]$$
$$\{CO_3^=\} = C_{carb} [ K_1K_2 / \{H^+\}^2 + K_1\{H^+\} + K_1K_2 ]$$

Using the first two equations, the ratio of concentration of carbonic acid to bicarbonate can be calculated over the pH range 5 to 10. This ratio, from the first two above equations, simplifies to $\{H_2CO_3\}/\{HCO_3^-\} = \{H^+\}^2/\{H^+\}K_1 = \{H^+\}/K_1$ which gives the following:

Table 1

| pH | $\{H^+\}$ | $\{H_2CO_3\}/\{HCO_3^-\}$ |
|---|---|---|
| 5 | $1 \times 10^{-5}$ | 23.25 |
| 6 | $1 \times 10^{-6}$ | 2.325 |
| 7 | $1 \times 10^{-7}$ | 0.2325 |
| 8 | $1 \times 10^{-8}$ | 0.02325 |
| 9 | $1 \times 10^{-9}$ | 0.002325 |
| 10 | $1 \times 10^{-10}$ | 0.0002325 |

Thus at pH 7, the ratio of $\{H_2CO_3\}/\{HCO_3-\}$ is about 0.25 (1:4) or 20% $H_2CO_3$ present. At pH 8 the ratio is only 0.023 (1:50) or 2% $H_2CO_3$ present. Should the pH of the liquid within the wet oxidation system drop to 7 or lower, the carbonic acid formed decomposes to carbon dioxide and water, with the carbon dioxide entering the gas phase. Further, the residence time of the gas phase within the wet oxidation system is much less than that of the liquid phase. Wet oxidation systems for caustic wastewaters are designed for a reactor vessel residence time of about 30 minutes to 120 minutes. Depending upon the strength of the waste, the gas phase residence time in the reactor vessel is about 5 minutes or less. Thus, any carbon dioxide driven into the gas phase is quickly carried through the system to the separator vessel **32** where it reports in the gas phase and is detected by the carbon dioxide monitor **34** in the upper gas conduit **36**.

In implementing the invention, a flow of caustic wastewater and oxygen containing gas is established through the wet oxidation system at selected elevated temperature and pressure. The operating temperature may be as low as 105°C (221°F) or as high as 300°C (572°F). Operating pressure may vary from about 45 psig (310 kPa) up to 4,000 psig (27,578 kPa) depending on the oxygen containing gas used in the system. The oxidized gas liquid mixture is separated into an oxidized liquid phase effluent and a gaseous phase effluent. The carbon dioxide content of the gaseous phase effluent is monitored to establish a baseline carbon dioxide content value while the pH of said system liquid effluent remains at 7 or above. There is generally little carbon dioxide in the gaseous phase when the oxidized liquid phase is caustic. There may be certain wastes which do produce a nonzero carbon dioxide offgas contest, so a baseline carbon dioxide level in the offgases is established.

Should the carbon dioxide content of the offgases exceed the baseline value by a selected proportion, an alarm means is activated to warn that additional alkalinity must be added to the raw caustic wastewater to maintain the system liquid effluent pH at 7 or above, thereby preventing excessive corrosion to the material of construction of the nickel-based alloy wet oxidation system.

In an alternative embodiment, a flow of clean water is first established through the wet oxidation system by filling the storage tank **10** with clean water and using the feed pump **14** to pump the clean water through the system. An oxygen-containing gas, supplied by the compressor **16**, is mixed with the clean water within the conduit **18**. The temperature and pressure within the system are elevated by the auxiliary heat exchanger **22**. Concentrated wastewater then is added to the system by means of a second feed pump (not shown) at any point as far downstream as the reactor vessel **24**. Alternative points of addition for the wastewater are shown as **40** and **42**. In this embodiment the flow of clean water from the water pump **14** is required to dilute the concentrated wastewater within the system and provide sufficient liquid water for evaporative cooling and heat removal from the reactor vessel **24**. The flow of clean water is also required to traverse the process heat exchanger **20** and recover the heat from the hot oxidized effluent leaving the system where the point of waste injection is beyond the process heat exchanger **20**.

Oxygen-containing gas addition points may be varied as well, depending on the characteristics of the particular wastewater treated by the system and the point of addition of the wastewater. These alternative points are denoted as **44** and **46**. A wastewater which fouls heat exchangers when heated with limited oxygen would dictate that the oxygen containing gas be added upstream of the wastewater point of addition. Other wastewaters become extremely corrosive when heated in the absence of dissolved oxygen, thus dictating the addition of oxygen containing gas to the wastewater upstream of any heating device. Certain wastes which are difficult to dissolve, slurry or suspend in water can be injected directly into the reactor vessel. In this situation the oxygen containing gas may be added directly to the reactor vessel **24** or at any point upstream of the reactor vessel.

EXAMPLE

A sample of spent caustic scrubbing liquor was obtained from a petrochemical plant. The liquor contained about 22 g/l of COD, mainly a mixture of sodium sulfide, $Na_2S$, and sodium hydrogen sulfide, NaHS. The liquor had a pH of 13.63 and contained about 15 g/l of sodium hydroxide, NaOH, and about 3.2 g/l of sodium carbonate, $Na_2CO_3$. The sulfides present will consume alkalinity on wet oxidation and lower the pH of the oxidized effluent. If sufficient alkalinity is not available, the pH will become acidic and damage the materials of construction of the wet oxidation system.

Samples of the caustic wastewater were partially neutralized with sulfuric acid to reduce the alkalinity available in each. The samples were each placed in an autoclave, pressurized with sufficient air to oxidize all COD contained, and heated at 160°C (194°F) for five minutes. After cooling, the carbon dioxide and oxygen content of the offgases were measured by gas chromatography. The pH of the oxidized liquid phase was also determined. The results of these analyses are shown in Table 2.

Table 2

| Run No. | 1 | 2 | 3 | 4 |
|---|---|---|---|---|
| pH of Feed | 13.63 | 13.35 | 13.30 | 13.21 |
| pH of Oxidized | 12.36 | 8.62 | 7.95 | 2.63 |
| Offgas $CO_2$, % | 0.00 | 0.00 | 0.26 | 0.44 |
| Offgas $O_2$, % | 11.40 | 12.62 | 11.30 | 11.05 |

In runs No. 3 and 4, the pH of the oxidized liquor phase drops to below about pH 8.0, and the carbon dioxide content of the gaseous phase increases above the 0.00 % baseline value found for runs No. 1 and 2. The carbon dioxide evolved in a continuous flow system is detected in the offgases and addition of alkalinity to the raw feed will maintain the oxidized effluent in the desired pH operating range.

The alkalinity added may be in the form of alkali metal hydroxides, such as sodium hydroxide or potassium hydroxide, or alkali metal carbonate or bicarbonate, such as sodium or potassium carbonate or bicarbonate. Alkaline earth metal. hydroxides, such as magnesium or calcium hydroxide, may also be used but these forms of alkalinity are less preferred.

From the foregoing description, one skilled in the art can easily ascertain the essential characteristics of the invention and, without departing from the spirit and scope thereof, make various changes and modifications to adapt it to various usages.

## Claims

1. A process for preventing corrosion to the materials of construction of a nickel-base alloy wet oxidation system treating raw caustic wastewaters at elevated temperature and pressure comprising the steps;

   (a) establishing a flow of caustic wastewater and oxygen containing gas through said wet oxidation system to produce an oxidized gas/liquid mixture;

   (b) separating said oxidized gas/liquid mixture into an oxidized liquid phase effluent and a gaseous phase effluent;

   (c) measuring the carbon dioxide content of said gaseous phase effluent to establish a baseline carbon dioxide content value while the pH of said system liquid effluent remains at 7 or above; and

   (d) adding sufficient alkalinity to said raw caustic wastewater to maintain said system liquid effluent pH at 7 or above, upon the carbon dioxide content of said gaseous phase effluent exceeding said baseline value by a selected proportion, thereby preventing excessive corrosion to the material of construction of said wet oxidation system.

2. A process according to claim 1 wherein said caustic wastewater is a sulfidic scrubbing liquor.

3. A process according to claim 1 wherein said elevated temperature is between about 105°C and 300°C.

4. A process according to claim 1 wherein said elevated pressure is between about 45 psig and 4,000 psig.

5. A process according to claim 1 wherein said oxygen containing gas is air.

6. A process for preventing corrosion to the materials of construction of a nickel-based alloy wet oxidation system treating raw caustic wastewaters at elevated temperature and pressure comprising the steps;

   (a) establishing a flow of clean water and oxygen containing gas through said wet oxidation system;

   (b) adding a caustic wastewater to said system at a point within a reactor vessel or at a point as far upstream of said reactor vessel as a process heat exchanger, to produce an oxidized gas/liquid mixture;

   (c) separating said oxidized gas/liquid mixture into an oxidized liquid phase effluent and a gaseous phase effluent;

   (d) measuring the carbon dioxide content of said gaseous phase effluent to establish a baseline carbon dioxide content value while the pH of said system liquid effluent remains at 7 or above; and

   (e) adding sufficient alkalinity to said raw caustic wastewater to maintain said system liquid effluent pH at 7 or above, upon the carbon dioxide content of said gaseous phase effluent exceeding said baseline value by a selected proportion, thereby preventing excessive corrosion to the material of construction of said wet oxidation system.

7. A process according to claim 6 wherein said caustic wastewater is a sulfidic scrubbing liquor.

8. A process according to claim 6 wherein said elevated temperature is between about 105°C and 300°C.

9. A process according to claim 6 wherein said elevated pressure is between about 45 psig and 4,000 psig.

10. A process according to claim 6 wherein said oxygen containing gas is air.

FIGURE

EP 0 564 115 A1

**European Patent Office**

# EUROPEAN SEARCH REPORT

Application Number

EP 93 30 1906

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | US-A-5 082 571 (ZIMPRO PASSAVANT ENVIRONMENTAL SYSTEMS INC.) <br> * column 8; claims 1,2 * <br> * column 6; example * <br> --- | 1-10 | C02F11/08 |
| A | PATENT ABSTRACTS OF JAPAN <br> vol. 010, no. 282 (P-500)25 September 1986 <br> & JP-A-61 100 659 ( FUJI ELECTRIC CO LTD ) <br> 19 May 1986 <br> * abstract * <br> --- | 1,6 | |
| A | DD-A-236 513 (VEB ING BAUWESEN) <br> * page 1; figure * <br> ----- | 1,6 | |

TECHNICAL FIELDS SEARCHED (Int. Cl.5 )

C02F

The present search report has been drawn up for all claims

| Place of search | Date of completion of the search | Examiner |
|---|---|---|
| THE HAGUE | 08 JULY 1993 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)